(19) Europäisches Patentamt / European Patent Office / Office européen des brevets

(11) **EP 4 597 429 A1**

(12) **EUROPEAN PATENT APPLICATION**

(43) Date of publication:
06.08.2025   Bulletin 2025/32

(21) Application number: 25154344.3

(22) Date of filing: 28.01.2025

(51) International Patent Classification (IPC):
*G06T 7/73* (2017.01)

(52) Cooperative Patent Classification (CPC):
**G06T 7/73;** G06T 2207/30244

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.01.2024   JP 2024011699**

(71) Applicant: **CANON KABUSHIKI KAISHA**
**Tokyo 146-8501 (JP)**

(72) Inventor: **SATO, Takatoshi**
**Tokyo, 146-8501 (JP)**

(74) Representative: **TBK**
**Bavariaring 4-6**
**80336 München (DE)**

(54) **INFORMATION PROCESSING DEVICE, INFORMATION PROCESSING METHOD, AND STORAGE MEDIUM**

(57)   An information processing device includes a derivation unit configured to derive a position of an imaging device using a captured image and a three-dimensional map; an evaluation unit configured to evaluate a stability of the position based on information used to derive the position; a preparation unit configured to prepare the three-dimensional map based on the captured image and the position; a setting unit configured to set information indicating reliabilities of information indicating the three-dimensional position of the feature of the subject and information indicating a three-dimensional position of the feature included in a predetermined area in the three-dimensional map, which are acquired based on the captured image in an extended area of a predetermined area, based on a result of evaluation from the evaluation unit; and a correction unit configured to correct the three-dimensional map based on the information indicating the reliabilities set.

FIG. 1

EP 4 597 429 A1

**Description**

BACKGROUND OF THE INVENTION

Field of the Invention

The present invention relates to an information processing device, an information processing method, and a storage medium.

Description of the Related Art

Measurement of a position/orientation of an imaging device based on an image is used for various purposes. An example of the purposes is alignment between a real space and a virtual object in mixed reality technology/augmented reality technology. Mixed reality is referred to as MR. Augmented reality is also referred to as AR. Another example of the purposes is self-localization for autonomous movement of a robot or automated driving of an automobile.

As the method of measuring a position/orientation of an imaging device on the basis of an image, a method of estimating a position/orientation of an imaging device on the basis of a correspondence between feature points detected in an image and a three-dimensional map that holds three-dimensional coordinates of the feature points in a scene is known.

In Japanese Unexamined Patent Publication No. 2020-13560, position/orientation measurement with high accuracy is realized by setting a high reliability for feature points of which positions are known in advance (hereinafter referred to as a "fixed feature point"), and increasing a contribution proportion of constraints thereof, and correcting a three-dimensional map at the time of correction of a position/orientation of an imaging device.

In the method disclosed in Japanese Unexamined Patent Publication No. 2020-13560, stability of position measurement may decrease when the number of feature points (hereinafter referred to as "natural feature points") other than the fixed feature point is small.

SUMMARY OF THE INVENTION

The present invention provides an information processing device capable of maintain the stability of position measurement even when the number of natural feature points is small. The present invention in its first aspect provides an information processing device as specified claims 1 to 12. The present invention in its second aspect provides an information processing method as specified claims 13 and 14. The present invention in its third aspect provides a non-transitory computer-readable storage medium as specified claim 15.

Further features of the present invention will become apparent from the following description of embodiments with reference to the attached drawings.

BRIEF DESCRIPTION OF THE DRAWINGS

Fig. 1 is a block diagram illustrating a hardware configuration of an information processing device according to a first embodiment of the present invention.
Fig. 2 is a block diagram illustrating a functional configuration of the information processing device according to the first embodiment of the present invention.
Fig. 3 is a diagram illustrating a three-dimensional map.
Fig. 4 is a flowchart illustrating an example of an information processing method according to the first embodiment.
Fig. 5 is a flowchart illustrating an example of a three-dimensional map correcting process.
Figs. 6A and 6B are conceptual diagrams illustrating correction of a three-dimensional map.
Fig. 7 is a diagram illustrating auxiliary indicators.
Fig. 8 is a diagram illustrating an example of a functional configuration of an information processing device 3 according to a third embodiment.
Fig. 9 is a flowchart illustrating an example of an information processing method according to the third embodiment.
Fig. 10 is a diagram illustrating an example of a graphical user interface according to a fourth embodiment.
Fig. 11 is a diagram illustrating a problem to be solved by the present invention.

DESCRIPTION OF THE EMBODIMENTS

Hereinafter, with reference to the accompanying drawings, favorable modes of the present invention will be described using Embodiments. Furthermore, not all combinations of features described in the embodiments are essential to the solution of the invention.

[First embodiment]

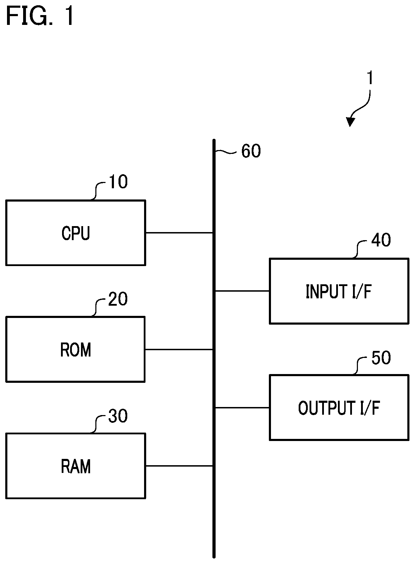

Fig. 1 is a block diagram illustrating a hardware configuration of an information processing device according to a first embodiment of the present invention. An information processing device 1 includes a CPU 10, a ROM 20, a RAM 30, an input I/F 40, an output I/F 50, and a bus 60. CPU is an abbreviation of Central Processing Unit. ROM is an abbreviation of Read Only Memory. RAM is an abbreviation of Random Access Memory. I/F is an abbreviation of interface. The CPU 10 is an example of a computer that executes a computer program.

The CPU 10 controls the constituent units connected to the bus 60 via the bus 60. The input I/F 40 acquires an input signal in a format which can be processed by the information processing device 1 from an external device (such as a display device or an operation device). The output I/F 50 outputs an output signal in a format which can be processed by an external device (such as a display device) to the external device.

A program for realizing functions according to the present invention is stored in a storage medium such as the ROM 20 which is a read only memory. The ROM 20 stores programs such as an OS and a device driver. OS is an abbreviation of Operating System. A memory such as the RAM 30 which is a random access memory temporarily stores such programs. By executing a program stored in the RAM 30, the CPU 10 performs processes which will be described later and realizes the functions according to the present invention. The functions according to the present invention may also be able to be realized using hardware including calculation units or circuits corresponding to the processes of the functional units instead of software processing using the CPU 10.

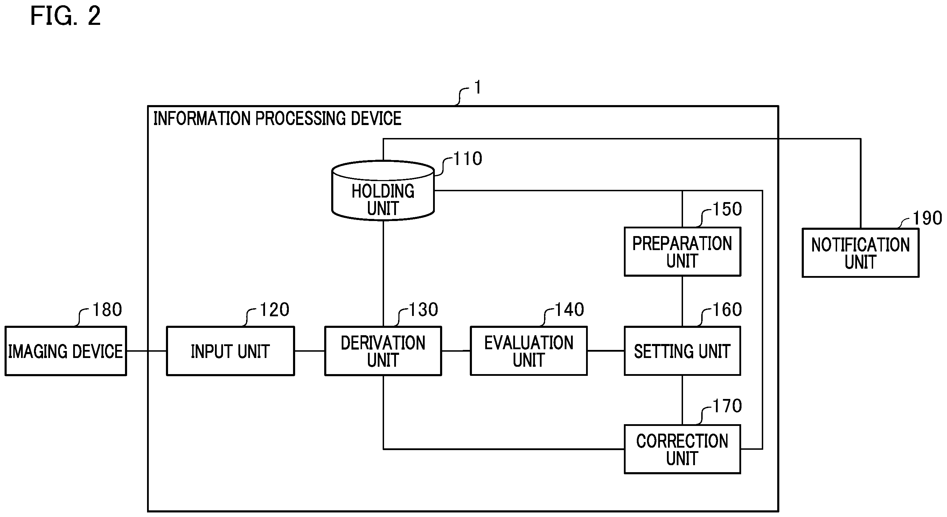

The information processing device 1 acquires an image from an imaging device 180 (see Fig. 2) and processes the acquired image. It is assumed that the imaging device 180 is a monocular camera. It is assumed that the imaging device 180 captures a grayscale image. The type of the imaging device 180 is not limited thereto. The imaging device 180 is variable in a position/orientation and acquires a captured image of a subject. In the following description, a three-dimensional coordinate system in which an optical center of the imaging device 180 is set as an origin, an optical axis direction is set as a Z axis, a horizontal direction of an image is set as an X axis, and a vertical direction of an image is set as a Y axis is defined as an imaging-device coordinate system or an imaging coordinate system. A position/orientation of the imaging device 180 denotes a position and a orientation of the imaging coordinate system (for example, a position of the origin and a direction of the Z axis) with respect to a reference coordinate system (hereinafter referred to as a "global coordinate system") defined in a space (a scene) in which imaging is performed. The position/orientation of the imaging device has six degrees of freedom (three degrees of freedom for position and three degrees of freedom for orientation). In the following description, an object which is present in a scene is referred to as a "subject." The type of a subject is not particularly limited and may be, for example, a building or a room.

The information processing device 1 matches feature points acquired from an image input from a camera which is the imaging device 180 and feature points acquired from a key frame of a three-dimensional map and generates and corrects the three-dimensional map while calculating a position/orientation of the camera. An information processing device that performs so-called SLAM will be described below. SLAM is an abbreviation of Simultaneous Localization and Mapping. For example, SLAM employs a method of Raul et al. (Document 1: Raul Mur-Artal et al., ORB-SLAM: A Versatile and Accurate Monocular SLAM System. IEEE Transactions on Robotics.) The calculated position/orientation is used, for example, in control of a mobile object. Examples of the mobile object include AMR and AGV. AMR is an abbreviation of Autonomous Mobile Robot. AGV is an abbreviation of Automatic Guides Vehicle.

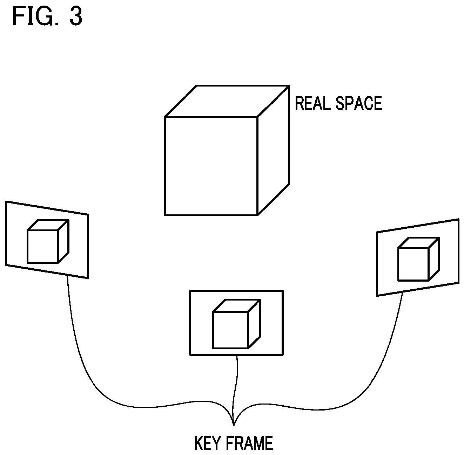

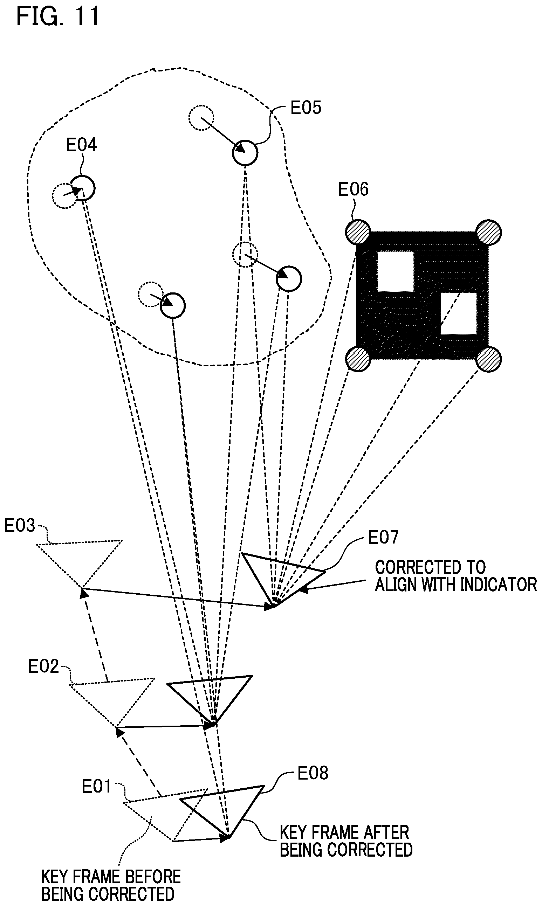

A problem to be solved by the present invention will be described below with reference to Fig. 11. Fig. 11 is a diagram illustrating the problem to be solved by the present invention. In Fig. 11, key frames E01 to E03 denote key frames before correction is performed thereon, and it is assumed that the key frame E03 is a newest key frame. The key frames will be described later with reference to Fig. 3. Key frames E07 and E08 denote key frames after correction is performed thereon. The key frame E07 is a key frame which is added when the imaging device has observed an indicator. Feature points E04 and E05 denote feature points which are used for measuring a position. The feature point E05 is a feature point which is observed by the key frame E07. When the key frame E03 is added, correction of a map is performed on the key frames E01 to E03.

When a reliability of an indicator E06 is high, a key frame position is corrected such that the key frame E07 aligns with the indicator E06. Therewith, the position of the feature point E05 is corrected to align with the indicator. On the other hand, the position of the feature point E04 is also corrected, but the feature point E04 is not observed by the key frame E07, is not corrected to align with the indicator, and is corrected such that coherence in observation information between the key frames in which the feature point E04 is observed is satisfied.

For example, when a small number of feature points which can be used for position measurement are included in the key frames E01 to E03 and stability of position measurement is low, errors are accumulated in the key frames. In this case, the feature point E05 is corrected to align with the indicator, and the feature point E04 is corrected to maintain coherence in observation information between the key frames E01 to E02 in which errors are accumulated. Accordingly, coherence between the feature point E04 and the feature point E05 is not satisfied, and the probability that any feature point will be an outlier is statistically increased at the time of position measurement. Accordingly, the number of feature points which can be used for position measurement decreases, and the stability of position measurement decreases.

On the other hand, in the first embodiment, stability of the position/orientation of the imaging device 180 is evaluated. When the stability of the position/orientation of the imaging device 180 is high, a reliability of a previously prepared part in a three-dimensional map of a scene is increased, a reliability of a part extended at the time of running is decreased, and then correction of the three-dimensional map is performed. On the other hand, when the stability of the position/orientation of the imaging device 180 is low, the previously prepared part in the three-dimensional map of the scene is set to be lower than when the stability is high, and then correction of the three-dimensional map is performed.

Fig. 2 is a block diagram illustrating a functional configuration of the information processing device according to the first embodiment of the present invention. The information processing device 1 includes a holding unit 110, an input unit 120, a derivation unit 130, an evaluation unit 140, a preparation unit 150, a setting unit 160, and a correction unit 170. The input unit 120 is connected to the imaging device 180. A notification unit 190 notifies an operator in accordance with an instruction from the information processing device 1. The notification unit 190 is, for example, a display device.

The holding unit 110 holds a three-dimensional map of a scene which is used for the derivation unit 130 to derive the position/orientation of the imaging device 180. In the present embodiment, the three-dimensional map includes information indicating three-dimensional positions of features of a subject. In another embodiment, the three-dimensional map includes information indicating an observation result of a subject at each of a plurality of viewpoints. The holding unit 110 sequentially holds previously prepared three-dimensional maps.

Fig. 3 is a diagram illustrating an example of a three-dimensional map. A three-dimensional map of a scene illustrated in Fig. 3 includes a set of key frames. A key frame is a captured image which is captured by an imaging device at various positions in the scene. The key frames include information indicating observation results of a subject at various viewpoints. For example, from the key frames, a position of a feature is acquired through a feature extracting process, and color information at a specific image position is acquired.

The three-dimensional map illustrated in Fig. 3 includes a position/orientation in the global coordinate system of an imaging device (that is, a viewpoint) at the time of capturing a key frame (hereinafter referred to as a "key frame position/orientation"). The three-dimensional map includes image coordinates $(u, v)$ of a feature (a feature point in the present embodiment) in a key frame and a depth $d$ (a z coordinate in the imaging coordinate system of the key frame) with respect to the position/orientation of the key frame. This information is information indicating a three-dimensional position of a feature of a subject. In the present embodiment, three-dimensional coordinates of a feature point in the imaging coordinate system are calculated from the image coordinates $(u, v)$ and the depth $d$ of a feature point using a known method (for example, Document 2: C. Forster, M. Pizzoli, and D. Scaramuzza, SVO: fast semi-direct monocular visual odometry, Proc. 2014 IEEE International Conference on Robotics and Automation (ICRA), pp. 15-22, 2014). The three-dimensional coordinates of feature points calculated in this way are used to measure the position/orientation of the imaging device 180 which will be described later.

Referring back to Fig. 2, the holding unit 110 holds three-dimensional information of a position/orientation of each key frame and geometric features in each key frame in addition to key frames as the three-dimensional map. This three-dimensional map may be generated using known techniques. In the present embodiment, the three-dimensional map of the scene is previously prepared. The holding unit 110 acquires the previously prepared three-dimensional map stored in a storage unit (not illustrated). In the following description, a previously prepared part in the three-dimensional map is referred to as a "prior map." That is, the prior map includes previously prepared information indicating a three-dimensional position of a feature (which may be referred to as a first feature). On the other hand, information indicating a three-dimensional position of a feature (which may be referred to as a second feature) is also added to the three-dimensional map by the preparation unit 150 which will be described later.

In the present embodiment, the prior map includes information of a plurality of key frames previous prepared, a position/orientation of each key frame, and feature points in each key frame. Here, the information of feature points includes image coordinates $(u, v)$ of each feature point and a depth $d$ of each feature point in the corresponding key frame. On the other hand, the present embodiment, the three-dimensional map is extended at the time of running (at the time of position measurement of the imaging device 180 in the information processing device 1). For example, when there is a likelihood that the imaging device 180 will depart from, for example, a range in which a position/orientation can be measured using the prior map according to predetermined conditions corresponding to the position/orientation of the imaging device 180, the three-dimensional map is extended. That is, information of a new key frame, a position/orientation of the key frame, and feature points in the key frame is added to the three-dimensional map. Measurement of the position/orientation of the imaging device 180 can be continued using this method. For example, when an obstacle is present in an area in which the prior map is to be prepared and the imaging device 180 avoids the obstacle, the imaging device 180 may depart from the range in which the position/orientation can be measured. When the imaging device 180 moves outward from the range in which the position/orientation can be measured using the prior map, the imaging device 180 may depart from the range in which the position/orientation can be measured.

The input unit 120 acquires a captured image (hereinafter referred to as an "input image") captured by the imaging device 180. The input unit 120 can acquire a moving image from the imaging device 180 and acquires, for example, a time-series image of 30 frames per second. A storage unit (not illustrated) of the information processing device 1 stores internal parameters (such as a focal distance, an image center position, and a lens distortion parameter) of the imaging device 180. The internal parameters of the imaging device 180 are calibrated in advance using a known method (for example, Document 3: Z. Zhang, A flexible new technique for camera calibration, IEEE Trans. on Pattern Analysis and Machine Intelligence, vol. 2, no. 11, pp. 1330-1334, 2000).

The derivation unit 130 derives the position/orientation of the imaging device 180 using the input image and the three-dimensional map. The derivation unit 130 derives the position/orientation of the imaging device 180 at the time of capturing of each image which is input from the input unit 120 in a time series.

The evaluation unit 140 calculates a stability of the position/orientation of the imaging device 180 derived by the derivation unit 130 using information used for the derivation unit 130 to derive the position/orientation.

The preparation unit 150 adds information indicating a three-dimensional position of an additional feature of the subject, which is acquired on the basis of the input image and the position/orientation of the imaging device 180, to the three-dimensional map. In this way, the three-dimensional map is extended. In the present embodiment, the preparation unit 150 extends the three-dimensional map by adding a key frame and information (a position/orientation of the key frame and information of a feature point) indicating the three-dimensional position of the additional feature included in the key frame. The preparation unit 150 adds a key frame, for example, when there is a likelihood that the position of the imaging device 180 will depart from the range in which the position/orientation can be measured using an existing three-dimensional map.

The setting unit 160 sets a reliability (information indicating the reliability) in information indicating a three-dimensional position of a feature. In the present embodiment, a higher reliability than the information indicating a three-dimensional position of a feature (the second feature) added by the preparation unit 150 is set in the information indicating a three-dimensional position of a feature (the first feature) included in the prior map. In the present embodiment, the setting unit 160 sets a reliability of a key frame included in the three-dimensional map. That is, the setting unit 160 sets the reliability of a key frame included in the prior map to be higher and sets the reliability of a key frame added by the preparation unit 150 at the time of running to be lower. On the other hand, the setting unit 160 changes the magnitude of the reliability of a key frame included in the prior map on the basis of the magnitude of the stability calculated by the evaluation unit 140. That is, when the stability is low, the setting unit 160 sets the reliability of a key frame included in the prior map to be lower than when the stability is high.

The correction unit 170 corrects information indicating a three-dimensional position of a feature included in the three-dimensional map on the basis of the reliability. For example, the correction unit 170 updates the information indicating a three-dimensional position of a feature included in the three-dimensional map according to the reliability. Through this process, the correction unit 170 can improve coherence of the three-dimensional map. This process is known as optimization of a three-dimensional map (or a pose graph). In the present embodiment, the correction unit 170 updates the information indicating a three-dimensional position of a feature by correcting a position/orientation of a key frame such that coherence of the three-dimensional map as a whole can be satisfied. The correction unit 170 performs the correction on the basis of the reliability of the key frame set by the setting unit 160. In the present embodiment, the correction unit 170 fixes the position/orientation of a key frame included in the prior map. Accordingly, it is possible to extend the range in which the position/orientation of the imaging device 180 can be measured while maintaining the accuracy.

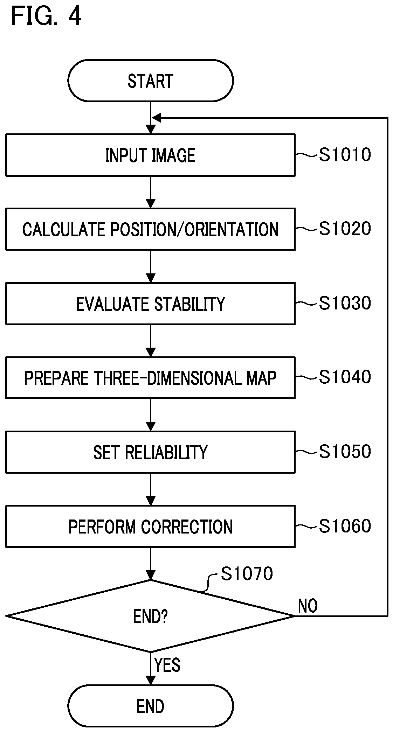

Processes that are performed by the information processing device 1 according to the present embodiment will be described below with reference to the flowchart illustrated in Fig. 4. The information processing device 1 performs an initialization process at the first time of a series of processes. In an example of the initialization process, the holding unit 110 reads a prior map from an external storage device (not illustrated). A method of preparing the prior map is not particularly limited. For example, the prior map is prepared using a plurality of captured images (key frames) and a position/orientation at a view point of each captured image (a position/orientation of each key frame). Image coordinates (u, v) and a depth d of a feature point are determined through extraction of a feature from the captured image and matching between the captured images. An example of the method of preparing a prior map is an SLAM technique. In the present embodiment, the prior map is prepared using the Raul et al.'s method (Document 1).

The holding unit 110 sets the reliabilities $B_i$ (where i=1, ..., Np) of key frames included in the prior map to be higher. Here, Np denotes the number of key frames included in the prior map.

In the present embodiment, the reliability of a key frame is an index indicating whether a position/orientation of a key frame is reliable. When the reliability of a key frame is high, a contribution proportion to correction performed by the correction unit 170 increases. Regarding a key frame included in the prior map, the correction unit 170 does not correct the position/orientation of the key frame. The position/orientation of a key frame included in the prior map is used as a constraint condition for correcting a position/orientation of a key frame which is generated at the time of running.

The prior map may be prepared with time in advance. For example, the prior map may be prepared in a stationary state in which a mobile object such as a person or an automobile is not included in a field of view. An optimization process which requires too long time to be performed in real time may be performed to prepare the prior map. In this way, it is possible to prepare a prior map with high accuracy. Accordingly, in the present embodiment, the reliability of a key frame included in the prior map is set to be high.

In Step S1010, the input unit 120 acquires an input image which is captured by the imaging device 180. The input unit 120 acquires an input image of one frame.

In Step S1020, the derivation unit 130 derives the position/orientation of the imaging device 180 when the input image has been captured using the three-dimensional map held by the holding unit 110 and the input image. Various known methods can be used as the derivation method. For example, the position/orientation is repeatedly corrected such that a difference between an image position of a feature point in the input image which is calculated on the basis of a three-dimensional position of the feature point and the derived position/orientation and an image position of the feature point in the input image decreases. In this way, the derivation unit 130 can derive the position/orientation of the imaging device 180. The derivation unit 130 may derive a relative position/orientation between a key frame and the imaging device 180 such that a difference in color (for example, a difference in luminance) between a feature point of the key frame and a corresponding point in the input image corresponding to the feature point determined on the basis of a three-dimensional position of the feature point decreases. The derivation unit 130 acquires the position/orientation of the imaging device 180 from the relative position/orientation and the position/orientation of the key frame. Here, the three-dimensional position of a feature point is determined on the basis of the position/orientation of the key frame and information of the feature point (image coordinates (u, v) and a depth d). In the present embodiment, a position/orientation deriving method disclosed in the Raul et al.'s method (Document 1) is used.

In Step S1030, the evaluation unit 140 calculates a stability on the basis of the number of feature points used for the derivation unit 130 to derive the position/orientation of the imaging device 180 in Step S1020. For example, the evaluation unit 140 increases the stability as the number of feature points used to derive the position/orientation increases and decreases the stability as the number of feature points decreases. As a specific calculation example, when the stability is assumed to be expressed in 0 to 1, the stability 0 is defined when the number of feature points is M, and the stability 1 is defined when the number of feature points is N, the stability can be calculated by Expression (1).

$$\text{Stability}=(\text{number of feature points}-M)/N-M) \qquad \ldots \text{Expression (1)}$$

Here, the stability is set to 1 when it is equal to or greater than 1 and is set to 0 when it is equal to or less than 0.

In Step S1040, the preparation unit 150 prepares (extends) a three-dimensional map using the position/orientation of the imaging device 180 derived in Step S1020. The preparation unit 150 extends the three-dimensional map by adding a key frame to the three-dimensional map. The preparation unit 150 extends the three-dimensional map when predetermined conditions are satisfied. Details of the process of Step S1040 will be described later. The number of key frames in the three-dimensional map to which a key frame has been added in Step S1040 is defined as $N_k$.

In Step S1050, the setting unit 160 sets a reliability $B_j$ (where $j=N_k$) of the key frame added to the three-dimensional map in Step S1040 to be low. Here, the reliability of a key frame refers to a reliability of information (the position/orientation of the key frame or information of feature points in the key frame) stored in the three-dimensional map in association with the key frame. At the time of running, it is difficult to control a situation of a scene such that a static state is maintained (for example, a moving object does not enter a field of view), and thus the reliability of the key frame is limited. Accordingly, in the present embodiment, the reliability of the key frame added at the time of running is set to be low. On the other hand, regarding the reliabilities of the key frames included in the prior map, a value obtained by multiplying the stability calculated in Step S1030 by the reliability set in advance in the corresponding key frame in the prior map is set as a new reliability.

In Step S1060, the correction unit 170 corrects the three-dimensional map. For example, the correction unit 170 corrects the position/orientation of each key frame included in the three-dimensional map such that the three-dimensional map coheres as a whole. Various known methods can be used as the correction method, and correction using the Raul et al.'s method (Document 1) is performed in the present embodiment.

On the other hand, in the present embodiment, the position/orientation of each key frame included in the prior map is not corrected, and only the position/orientation of the key frame generated at the time of running and information indicating a three-dimensional position of a feature are updated.

In this way, the correction unit 170 can improve coherence of the three-dimensional map by updating information indicating a three-dimensional position of a feature while fixing information indicating a three-dimensional position of a feature which has been prepared in advance and which has not prepared by the preparation unit 150. Accordingly, it is possible to extend a range in which a position/orientation can be measured without changing the prior map prepared with high accuracy. Here, a degree of constraint on the prior map changes on the basis of the magnitude of the reliability $B_j$. Specifically, since the reliability is low when the stability of the position/orientation of the imaging device 180 is low, an influence of the prior map decreases and an influence of the three-dimensional map generated at the time of running increases. Accordingly, the accuracy of the position/orientation is temporarily decreased, but the stability can be increased. Details of the process of Step S1060 will be described later.

In Step S1070, the derivation unit 130 determines whether to end the measurement of a position/orientation. For example, when a user's end instruction is input from an input device such as a mouse or a keyboard via the input I/F 40, measurement of a position/orientation ends. When measurement is not to end, the process flow returns to Step S1020, and the measurement of a position/orientation is continued.

(Detailed process of Step S1040)

In Step S1040, the preparation unit 150 first determines whether to extend the three-dimensional map, that is, whether to add a new key frame to the three-dimensional map. Here, the preparation unit 150 performs the determination on the basis of the position/orientation of the imaging device 180 derived in Step S1030 as follows.

First, the preparation unit 150 selects a key frame (hereinafter referred to as a "nearest key frame" or simply a "nearby key frame") in the three-dimensional map on the basis of the derived position/orientation of the imaging device 180. For example, the preparation unit 150 selects a nearby key frame according to predetermined conditions on the basis of the derived position and a sight line direction (the Z-axis direction of the imaging coordinate system in the global coordinate system) of the imaging device 180 and the position and a sight line direction of the key frame. The preparation unit 150 selects a key frame with a position and a sight line direction close to the imaging device 180 as a nearby key frame. For example, the preparation unit 150 selects a key frame group from the three-dimensional map on the basis of an optical axis direction of the imaging device 180. Here, an angle difference between the optical axis direction of the imaging device 180 and the optical axis direction of the selected key frame group in the global coordinate system is less than a threshold value Tv. Then, the preparation unit 150 selects a nearby key frame from the key frame group. Here, the nearby key frame is a key frame of which the position is closest to the position of the imaging device 180 out of the key frames included in the key frame group.

Then, whether to add a new key frame is determined on the basis of the number of feature points in the nearby key frame included in the input image acquired in Step S1010. For example, the preparation unit 150 calculates image coordinates of each feature point in the nearby key frame in the input image acquired in Step S1010. For example, first, the preparation unit 150 calculates three-dimensional coordinates $X_{key}$ of each feature point in the imaging coordinate system of the nearby key frame using the aforementioned method to calculate the image coordinates. Then, the preparation unit 150 converts the three-dimensional coordinates $X_{key}$ to three-dimensional coordinates $X_{Cam}$ in the imaging coordinate system of the imaging device 180 at the time of capturing the input image using the position/orientation of the nearby key frame and the position/orientation of the imaging device 180. Finally, the preparation unit 150 converts the three-dimensional coordinates $X_{Cam}$ to the image coordinates (u, v) of the input image using internal parameters of the imaging device 180. In this way, the preparation unit 150 calculates a proportion $R_{inc}$ of feature points in which the calculated image coordinates are included in the input image. When $R_{inc}$ is small, it means that the nearest key frame and the input image overlap less, and thus the imaging device is likely to depart from the position/orientation measuring range. Accordingly, when $R_{inc}$ is less than a threshold value $T_{inc}$, the preparation unit 150 determines that a new key frame is to be added.

When it is determined that a new key frame is to be added, the preparation unit 150 adds the input image as a new key frame using the Raul et al.'s method (Document 1). When the Raul et al.'s method (Document 1) is used, information of feature points in the new key frame is prepared by projecting and spreading information of feature points in the immediately previous key frame (or in the nearby key frame) onto the input image. For example, by acquiring three-dimensional coordinates of a feature point from the information of feature points in the nearby key frame and projecting the three-dimensional coordinates onto the input image, the image coordinates (u, v) and the depth d of each feature point in the new key frame are determined.

On the other hand, when it is determined that a new key frame is not to be added, the preparation unit 150 updates the information (image coordinates (u, v) and depths d) of feature points in the key frame which is immediately previously prepared. For example, the preparation unit 150 can add information of a new feature point or update information of the depth d by performing extraction of features from captured images and matching between the captured images. This process may be performed, for example, using the Raul et al.'s method (Document 1).

(Detailed process of Step S1060)

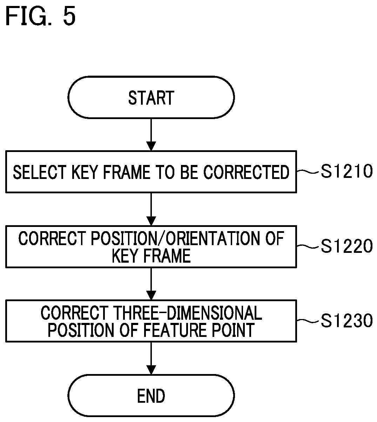

Fig. 5 is a flowchart illustrating a flow of the three-dimensional map correcting process in Step S1060. In the optimization process, substantially, information indicating a three-dimensional position of a feature is updated such that an error between an observation result of observation at a viewpoint (a position/orientation of a key frame) and an observation result of actual observation at a viewpoint decreases when a feature is located at a three-dimensional position. In the present embodiment, information indicating the three-dimensional position of the feature and the position/orientation of the key frame is updated such that an error (a re-projection error) between a detected position of the feature in an image and a position at which the feature is projected onto the image using the estimated position/orientation of the imaging device decreases. Specifically, when a new key frame is added, a three-dimensional position of a feature point and a position/orientation of a key frame are updated such that a re-projection error between feature points in a predetermined number of nearby key frames including the new key frame is minimized. This process is a process of performing local bundle adjustment using the Raul et al.'s method (Document 1).

After this process has been performed in Steps S1210 to S1220, information of positions/orientations of the new key frame and the existing key frames and three-dimensional positions of features observed in the key frames is updated. The process of Step S1060 will be specifically described below.

In Step S1210, the correction unit 170 retrieves a predetermined number of key frames in which the position/orientation is close to the key frame newly added in Step S1040 out of the key frames added in the past. In the following description, the key frame newly added in Step S1040 is referred to as a "new key frame." For example, the correction unit 170 selects a predetermined number of key frames in which an angle difference of the optical axis direction in the global coordinate system (the Z axis in the imaging coordinates system) from that of the new key frame is less than a threshold value $T_{Angle}$ and a position difference thereof is less than a threshold value $T_{Dist}$.

In Step S1220, the correction unit 170 performs local bundle adjustment using the Raul et al.'s method (Document 1) on the key frames selected in Step S1210. In Step S1220, the correction unit 170 updates information of the positions/orientations of the key frames including the new key frame and the three-dimensional positions of the feature points as a result. In this way, the correction unit 170 corrects the three-dimensional map. In Step S1220, only the key frames generated at the time of running are corrected, and the positions/orientations of the key frames included in the prior map are not corrected.

An error between a projection position at which feature points are projected onto the image using the positions/orientations in the global coordinate system included as attributes in the key frames and a detection position at which the feature points are detected in the image corresponding thereto is used for correction of the positions/orientations and correction of the three-dimensional positions of the feature points. In this case, a sum of the re-projection errors is used as an evaluation function. In this way, the positions/orientations of the key frames are updated such that the three-dimensional positions of the feature points included in the three-dimensional map and the positions/orientations of the key frames align with each other.

The correction unit 170 performs correction such that Expression (2) is minimized. Expression (2) is a sum in the key frames selected in Step S1210 out of all the key frames included in the three-dimensional map. Information of the key frames included in the prior map is used to calculate a relative position/orientation between the key frames required for correcting the position/orientation of the key frame generated at the time of running.

$$\Sigma(\text{reliability of key frame})\cdot(\text{re-projection error of feature point})$$

$$\text{Expression (2)}$$

For example, a Gauss-Newton method of performing repeated calculation is used in minimization of Expression (2). The position/orientation derived in Step S1020 is used as an initial value of the position/orientation of the new key frame. The corrected position/orientation is stored as attributes of the key frame in the three-dimensional map again and is used as an initial value for correcting the three-dimensional map in the next time. The correction unit 170 can change a contribution proportion of each constraint condition by multiplying the reliability of each key frame by an error. That is, the contribution proportion increases when the reliability is high, and the contribution proportion decreases when the reliability is low.

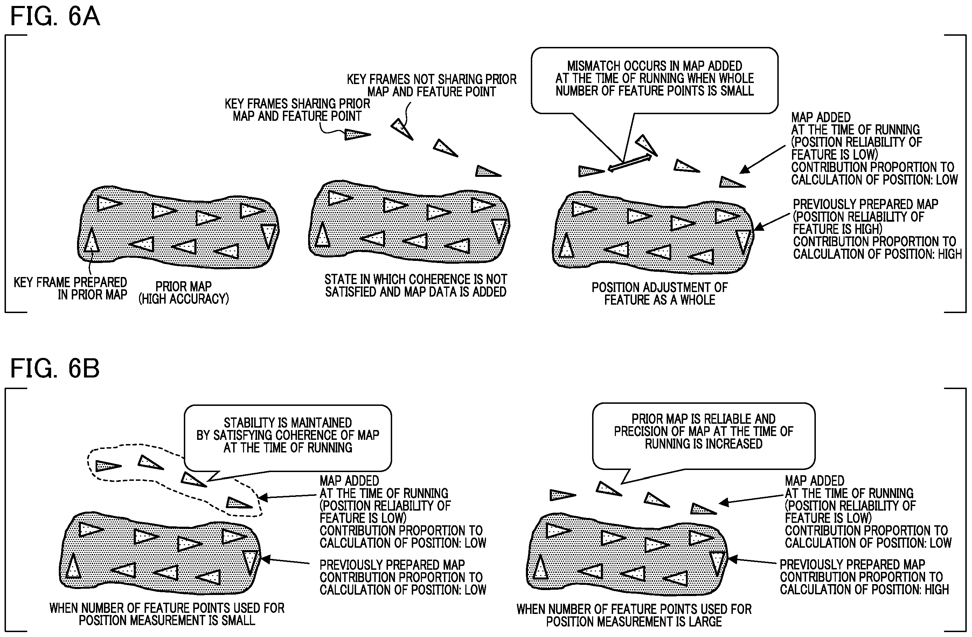

Figs. 6A and 6B are conceptual diagrams associated with correction of a three-dimensional map. Fig. 6A is a diagram illustrating correction according to the related art. As illustrated in the left part of Fig. 6A, it is assumed that a prior map is prepared. When the imaging device departs from a range in which a position/orientation can be measured using the prior map, map data is added as illustrated in the central part of Fig. 6A. The cohering process is not performed herein. Then, as illustrated in the right part of Fig. 6A, position adjustment of the features is performed on the basis of the prior map and the extended map (the extended area). Since the contribution proportion to position calculation in the prior map is high, a key frame sharing features with the prior map out of the key frames added at the time of running is corrected to align with the prior map. On the other hand, when the total number of feature points is small, the number of feature points shared by the key frames added at the time of running is small, and thus a key frame not sharing features with the prior map is not corrected to align with the prior map. As a result, incoherence occurs between a key frame sharing features with the prior map and a key frame not sharing features with the prior map. Since position measurement is performed using feature points in nearby key frames including the key frame with incoherence, the number of feature points which can be used for position measurement decreases, and the stability decreases.

Fig. 6B is a diagram illustrating correction according to the present embodiment. In the present embodiment, when the number of feature points used for position measurement is small, the contribution proportion to position calculation in the prior map is set to the same as in the map added at the time of running as illustrated in the left part of Fig. 6B. In the present embodiment, coherence between the key frames added at the time of running is maintained, which causes stabilization of position measurement in this way. In the present embodiment, when the number of feature points used for position measurement is large, the contribution proportion to position calculation in the prior map increases as illustrated in the right part of Fig. 6B. In the present embodiment, the key frame added at the time of running is corrected to align with the prior map in this way, which can improve the accuracy. That is, according to the present embodiment, it is possible to enhance the accuracy while maintaining the stability of position measurement.

As described above, in the first embodiment, whether the reliability of a part prepared in advance in a three-dimensional map is set to be high is determined on the basis of the stability of the positions/orientations, and the three-dimensional map is corrected. Accordingly, when the stability is high, correction is performed such that coherence with the prior map is maintained, which improves the accuracy. On the other hand, when the stability is low, the accuracy decreases temporarily, the stability increases, and position measurement can be continued. That is, in measurement of a position/orientation of an imaging device using existing three-dimensional information, it is possible to maintain the stability of position measurement even when the number of natural feature points is small.

[Second embodiment]

In the first embodiment, the range in which a position/orientation can be measured is extended while maintaining the accuracy of a three-dimensional map by increasing the reliability of a part prepared in advance in the three-dimensional map of a scene. In a second embodiment, an auxiliary indicator for measuring the position/orientation of the imaging device 180 on the basis of a captured image (hereinafter referred to as an auxiliary indicator) is disposed in a space (scene) in which a subject is located. This auxiliary indicator is different from features which are originally present in the scene. The reliability based on information of the auxiliary indicator is given to information indicating three-dimensional positions of features. For example, a higher reliability than features which are originally present in the scene is given to information indicating three-dimensional positions of features of which coordinates are known by the auxiliary indicator. In this way, the reliability based on the auxiliary indicator in the three-dimensional map is increased. In the second embodiment, it is possible to extend a range in which a position/orientation can be measured while maintaining the accuracy of the three-dimensional map using this method.

A configuration and a process of an information processing device according to the present embodiment will be described below with reference to Figs. 1 and 2. The configuration and the process of the information processing device according to the present embodiment are similar to those in the first embodiment, and differences therefrom will be described below.

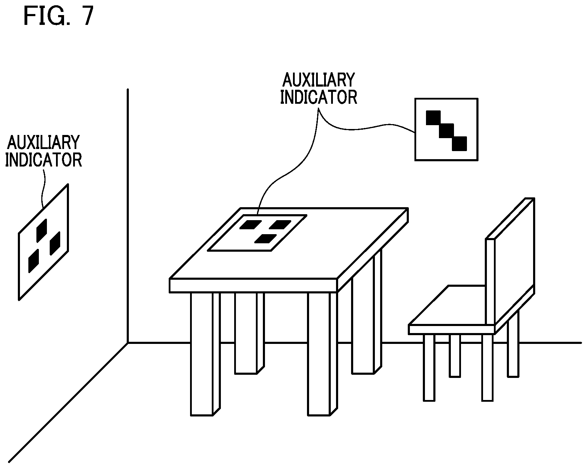

Fig. 7 is a diagram illustrating an auxiliary indicator. In the present embodiment, a three-dimensional map of a scene which has been prepared in advance is not used. Instead, as illustrated in Fig. 7, an auxiliary indicator (a marker) is disposed in a scene. In the present embodiment, an auxiliary indicator with a predetermined shape in which an identifier which can be read through image analysis is recorded is used. In the example illustrated in Fig. 7, a white and black square indicator including individual identifiers therein is disposed as the auxiliary indicator. Arrangement information of the auxiliary indicator, that is, a position/orientation in the global coordinate system of the auxiliary indicator, is calibrated in advance. An example of the calibration method is a method disclosed in the specifications of Japanese Patent No. 4532982 or U.S. Patent No. 7529387. The setting unit 160 holds arrangement information which has been calibrated in advance for the auxiliary indicator disposed in the scene.

The derivation unit 130 derives a position/orientation of the imaging device 180 similarly to the first embodiment. However, in the present embodiment, when the information processing device 1 starts, no key frame of the three-dimensional map is not included, and thus the derivation unit 130 derives the position/orientation of the imaging device 180 using the auxiliary indicator. For example, the derivation unit 130 derives the position/orientation of the imaging device on the basis of a position of the auxiliary indicator detected from an input image and the arrangement information of the auxiliary indicator. In the present embodiment, for example, a Kato et al.' method (Document 4: H. Kato, M. Billinghurst, I. Poupyrev, K. Imamoto, and K. Tachibana, Virtual object manipulation on a table-top AR environment, Proc. IEEE and ACM International Symposium on Augmented Reality 2000, pp. 111-119, 2000) is used.

The setting unit 160 sets the reliability (information indicating the reliability) in information indicating a three-dimensional position of a feature. In the present embodiment, a higher reliability than that of information indicating a three-dimensional position of a feature (a second feature) added by the preparation unit 150 is given to information indicating a three-dimensional position of a feature (a first feature) of which coordinates on the auxiliary indicator are known.

The correction unit 170 corrects information indicating a three-dimensional position of a feature included in the three-dimensional map on the basis of the reliability of the information. For example, the correction unit 170 updates the information indicating a three-dimensional position of a feature included in the three-dimensional map according to the reliability of the information. Through this process, the correction unit 170 can enhance coherence of the three-dimensional map. This process is known as optimization of the three-dimensional map (or a pose graph). In the present embodiment, the correction unit 170 updates the information indicating a three-dimensional position of a feature by correcting positions/orientations of key frames such that the coherence of the whole three-dimensional map can be satisfied. For example, the correction unit 170 fixes features in which the coordinates on the auxiliary indicator are known. Accordingly, it is possible to extend a range in which the position/orientation of the imaging device 180 can be measured while maintaining the accuracy.

In the process flow according to the present embodiment, the processes of Steps S1010 to S1040 and Step S1070 in Fig. 4 are the same as in the first embodiment. The processes of Steps S1050 to S1060 according to the present embodiment will be described below.

At the time of initialization, the holding unit 110 acquires the arrangement information of the auxiliary indicator calibrated in advance from an external storage device (not illustrated).

In Step S1050, the setting unit 160 calculates the reliability of information indicating a three-dimensional position of a feature on the auxiliary indicator on the basis of the stability (a value ranging from 0 to 1) of the position/orientation of the imaging device 180 calculated in Step S1030. Specifically, the reliability when the stability is 1 is set in advance. For example, when the reliability of the information indicating the three-dimensional position of a feature generated at the time of running is defined as A, the reliability of information indicating the three-dimensional position of a feature on the auxiliary indicator is set to a reliability B higher than the reliability A (A<B). A value obtained by multiplying the reliability B by the stability is calculated as the reliability which finally becomes a degree of contribution to correction.

In correction of a position/orientation of a key frame and a three-dimensional position of a feature point, such a position/orientation that a sum of errors expressed by Expression (3) is minimized is calculated. Expression (3) is a sum for the feature points included in the key frame selected in Step S1210 out of all the feature points included in the three-dimensional map.

$$\Sigma(\text{reliability of feature point}) \cdot (\text{re-projection error of feature point}) \qquad .$$

Expression (3)

For example, a Gauss-Newton method of performing repeated calculation is used in minimization of Expression (3). The contribution proportion of each constraint condition can be changed by multiplying the reliability of each feature point by the re-projection error. That is, the contribution proportion increases when the reliability is high, and the contribution proportion decreases when the reliability is low.

Accordingly, when the stability is high, the accuracy is improved by matching features of the auxiliary indicator. When the stability is low, the accuracy decreases temporarily, the number of feature points which can be used for position measurement increases, and position measurement can be continued.

In Step S1060, the correction unit 170 corrects the three-dimensional map. For example, the correction unit 170 corrects the positions/orientations of the key frames included in the three-dimensional map such that the whole three-dimensional map coheres. Various known methods can be used as the correction method, and correction based on the Raul et al.'s method (Document 1) is performed in the present embodiment.

On the other hand, in the present embodiment, information indicating the three-dimensional position of the first feature is not updated, and information indicating the three-dimensional position of the second feature generated at the time of running is updated. In this way, the correction unit 170 updates the information indicating the three-dimensional position of a feature on the auxiliary indicator while fixing information indicating the three-dimensional positions of features on the auxiliary indicator in which coordinates are known, whereby it is possible to improve the coherence of the three-dimensional map. Accordingly, according to the present embodiment, it is possible to extend the range in which a position/orientation can be measured without changing the information of the auxiliary indicator with high accuracy.

As described above, in the second embodiment, whether the reliability of a feature point with known coordinates on the auxiliary indicator is set to be higher is determined on the basis of the stability of the position/orientation, and the three-dimensional map is corrected. Accordingly, when the stability is high, correction is performed such that coherence with the auxiliary indicator is maintained, and thus the accuracy is improved. When the stability is low, the accuracy decreases temporarily, the stability increases, and position measurement can be continued. That is, in measurement of a position/orientation of an imaging device using existing three-dimensional information, it is possible to maintain the stability of position measurement even when the number of natural feature points is small.

(Modified examples of first embodiment and second embodiment)

Modified examples of variations of a stability evaluating method will be described below. For example, the stability may be set to decrease as a degree of deviation of a distribution of features on an image decreases.

In the first embodiment and the second embodiment, the evaluation unit 140 calculates the stability of the position/orientation of the imaging device 180 on the basis of the number of natural feature points, but the present invention is not limited thereto. For example, the stability may be calculated on the basis of a degree of deviation of a distribution of feature points on an image. In a specific example, a captured image is divided into $16\times16$ grids, and whether a feature point is included in each grid is determined. Then, a value obtained by multiplying a difference between a maximum value and a minimum value of grid coordinates in the X-axis (horizontal-axis) direction of an image by a difference between a maximum value and a minimum value of grid coordinates in the Y-axis (vertical-axis) direction of the image is calculated as a value indicating extension of the distribution of feature points. That is, as the value indicating extension of the distribution of feature points increases, the deviation of the distribution of features decreases, and the stability increases. As the method of calculating a deviation of the distribution of features, another method may be used as long as it can express a degree of unevenness of features in the image.

In another modified example, the stability may be set to decrease as the number of feature points in which a variance of depths is large decreases. That is, the stability may be calculated on the basis of the number of feature points in which a variance of depths of feature points detected in a captured image is large. In calculation of the variance of depths of feature points, a method described in Document 5 (J. Engel, T. Schoeps, and D. Cremers, LSD-SLAM: Large-scale direct monocular SLAM, Proc. 14th European Conference on Computer Vision (ECCV), pp. 834-849, 2014) may be used.

In another modified example, the stability may be set to decrease as a change in luminance in a time series increases. That is, the stability may be calculated on the basis of a change in luminance of a captured image in a time series. In a specific example, average luminance of a captured image in five nearby frames may be maintained, and the stability may be calculated to decrease as the variance value thereof increases.

In another modified example, the stability may be set to decrease as the amplitude of a position in a time series increases. That is, the stability may be calculated on the basis of a change in position of the imaging device in a time series. In a specific example, the position of the imaging device in N nearby frames may be maintained, and the stability may be calculated to decrease as the variance value thereof increases.

In another modified example, the stability may be set to decrease as the number of moving objects in an image increases. That is, the stability may be calculated on the basis of a proportion of moving objects occupying the captured image. In a specific example, moving objects such as persons are recognized using a recognition model based on deep learning, and an area of the moving objects occupying the image is calculated. Then, a proportion of the area of the moving objects occupying the image may be calculated, and the stability may be calculated to decrease as the proportion increases.

In another modified example, the stability may be set to decrease as a speed or an angular velocity increases. That is, the stability may be calculated on the basis of a value of a speed or an angular velocity of the imaging device 180 which is calculated from the position/orientation of the imaging device 180. In a specific example, a speed or an angular velocity may be calculated from a difference in position/orientation between a newest frame and a previous frame, and the stability may be calculated to decrease as the value increases.

In another modified example, the stability may be set to decrease as a difference from a position measurement result of another sensor increases. In the first embodiment and the second embodiment, only a camera is used as a sensor, but the present invention is not limited thereto. A plurality of sensors may be provided in the present invention. The information processing device may calculate a difference from a position measurement result of another sensor and perform calculation such that the stability decreases as the difference increases. In a specific example, a system in which an inertial sensor for measuring a speed and an angular velocity is provided in addition to a camera will be described. A difference between an amount of movement calculated from a newest frame and a previous frame derived by the derivation unit 130 and an amount of movement calculated by integrating an acceleration value of the inertial sensor in that section may be calculated, and the stability may be calculated to decrease as the difference increases.

A modified example of a variation of the setting method will be described below. For example, the reliability of an indicator feature may be set to increase as the stability increases. In the first embodiment and the second embodiment, the setting unit 160 sets the reliability of a key frame in the prior map or the reliability of information on a three-dimensional position of a feature in which coordinates on a feature of the auxiliary indicator are known to decrease as the stability decreases. In the present invention, the reliability may be set to increase as the stability increases.

Another modified example of a variation of the indicator will be described below. In the present invention, for example, BIM or CAD may be used as an indicator. BIM is an abbreviation of Building Information Modeling, and CAD is an abbreviation of Computer Aided Design. In the first and second embodiments, an auxiliary feature such as a prior map or an auxiliary indicator is used as an indicator with a high reliability, but the present invention is not limited thereto as long as it is three-dimensional information with high accuracy. For example, by aligning information of an accurate three-dimensional model such as BIM or CAD and information of a generated three-dimensional map and setting the reliability of a feature obtained from the three-dimensional model to be high, it is possible to improve the accuracy of the three-dimensional map.

[Third embodiment]

In the first embodiment and the second embodiment, a method of generating a three-dimensional map with high stability and accuracy on the basis of information with a high reliability such as a prior map or an auxiliary feature and the stability of the position/orientation of the imaging device 180 has been described above. In a third embodiment, an example in which constraint of the prior map or the auxiliary feature is used to derive the position/orientation of the imaging device 180 will be described.

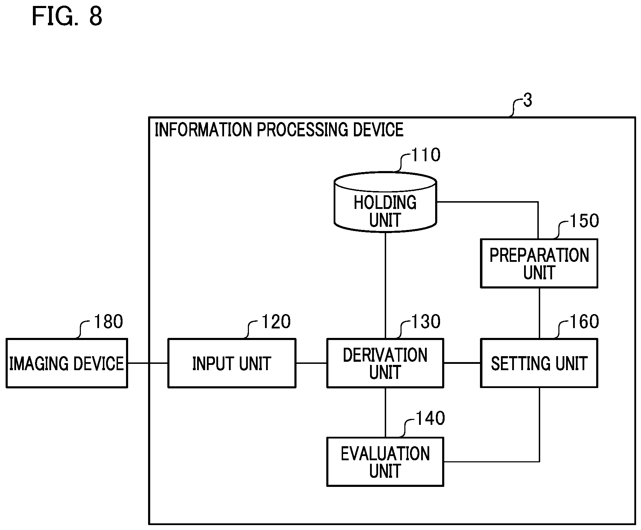

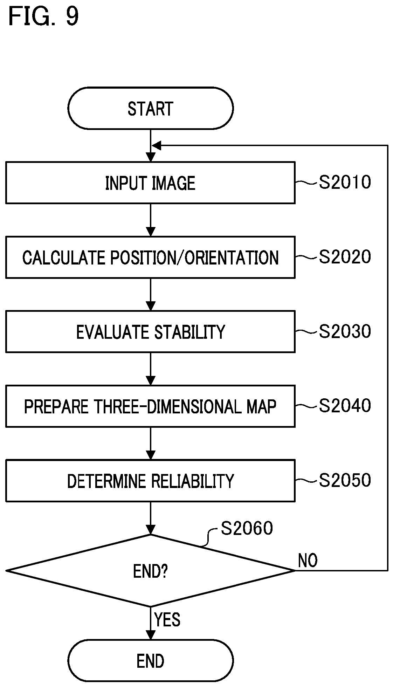

A configuration and a process of an information processing device according to the present embodiment will be described below with reference to Figs. 8 and 9. Fig. 8 is a diagram illustrating an example of a functional configuration of an information processing device 3 according to the third embodiment of the present invention. Fig. 9 is a flowchart illustrating an example of an information processing method according to the third embodiment of the present invention. The configuration and the process of the information processing device according to the present embodiment are similar to those of the second embodiment, and differences will be described below.

The holding unit 110 holds arrangement information of the auxiliary feature and also holds a three-dimensional map that is prepared by the preparation unit 150 at the time of running similarly to the second embodiment.

The derivation unit 130 derives the position/orientation of the imaging device 180 on the basis of the reliability of information indicating a three-dimensional position of a feature included in the three-dimensional map using an input image, the three-dimensional map, and arrangement information of the auxiliary feature.

The process flow according to the present embodiment will be described below with reference to the flowchart illustrated in Fig. 9. In the initialization process, the holding unit 110 acquires the arrangement information of the auxiliary indicator calibrated in advance from an external storage device (not illustrated).

Step S2010 and Steps S2030 to S2060 are the same processes as Step S1010, Steps S1030 to S1050, and Step S1070, and thus description thereof will be omitted.

In Step S2020, the derivation unit 130 derives the position/orientation of the imaging device 180 when the input image has been captured using the three-dimensional map held by the holding unit 110 and the input image. As the derivation method, for example, a method of repeatedly correcting the position/orientation such that a difference (a re-projection error) between an image position of a feature point in the input image calculated on the basis of the three-dimensional position and the derived position/orientation of the feature point and an image position of the feature point in the input image decreases is used. The reliability of information of the three-dimensional positon of the feature set by the setting unit 160 is reflected as a degree of contribution to repeated calculation, and the position/orientation is calculated. Specifically, the position/orientation is calculated such that a sum of errors expressed by Expression (4) is minimized.

$$\Sigma(\text{reliability of feature point})\cdot(\text{re-projection error of feature point}) \ldots \text{Expression}$$

$$(4)$$

Accordingly, it is possible to increase a contribution proportion to calculation of a position/orientation of a feature point with a high reliability such as an auxiliary feature and to improve the accuracy of measurement of the position/orientation. On the other hand, when the stability is low, it is possible to maintain the number of feature points which can be used for position measurement and to continue the position measurement by decreasing the reliability of the auxiliary feature on the basis of the stability calculated by the evaluation unit 140.

As described above, in the third embodiment, the reliability of information indicating a three-dimensional position of a feature in which coordinates on an auxiliary indicator are known in the three-dimensional map is adaptively changed on the basis of the stability of the position/orientation of the reliability, and the position/orientation of the imaging device is derived. Accordingly, when the stability is high, it is possible to maintain the accuracy by cohering with the auxiliary feature of which coordinates are known. On the other hand, when the stability is low, it is possible to curb a decrease in the number of feature points due to excessively cohering with the auxiliary feature by loosening the constraint of the auxiliary feature and to maintain the stability.

[Fourth embodiment]

In the first embodiment, the second embodiment, and the third embodiment, the information processing device 1 or 3 may display information on side effects, which are caused by lowering the reliability of the prior map or the auxiliary feature on the basis of the stability of the imaging device 180, on a GUI of the notification unit 190. GUI is an abbreviation of Graphical User Interface.

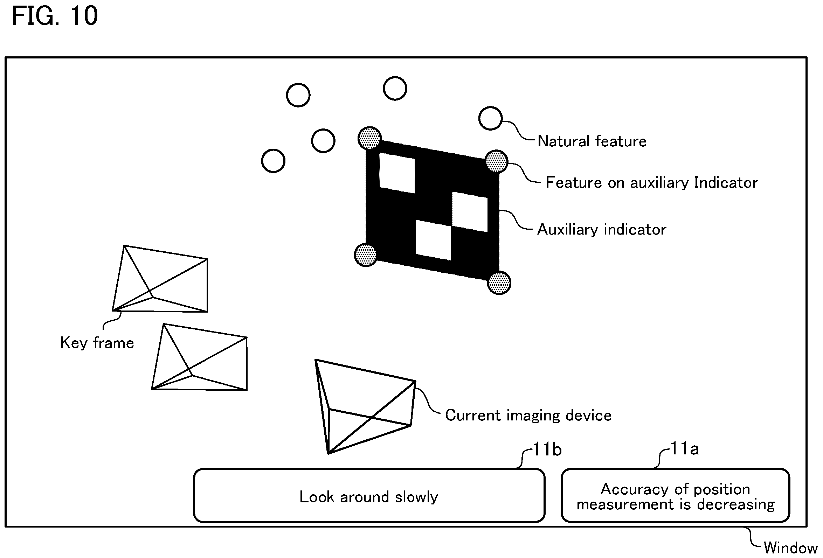

Fig. 10 is a diagram illustrating an example of the GUI according to a fourth embodiment. For example, a message indicating that the accuracy of position measurement decreases due to temporary incoherence with an auxiliary feature may be displayed as indicated by an indication 11a in Fig. 10. As indicated by an indication 11b, a user may be notified of an advice for improving the stability. The notification unit 190 notifies, for example, that a surrounding environment is looked around by a camera using the indication 11b. Accordingly, it is possible to increase the number of feature points in the three-dimensional map and to easily improve the stability of derivation of the position/orientation. The notification unit 190 may notify that the camera goes away from the auxiliary indicator. Accordingly, it is possible to increase the number of natural feature points in a field of view and to easily improve the stability of derivation of the position/orientation. The notification unit 190 may notify that the camera faces in a direction in which there are many natural features such as objects or figures. Accordingly, it is possible to increase the number of natural feature points in the field of view and to easily improve the stability of derivation of the position/orientation.

(Other embodiments)

The present invention can also be realized as a process of supplying a program for realizing one or more functions of the above-mentioned embodiments to a system or device via a network or a storage medium and causing one or more processors in a computer of the system or device to read and execute the program. The present invention can also be realized using a circuit (for example, an ASIC) for realizing one or more functions.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the information processing device or the like through a network or various storage media. Then, a computer (or a CPU, an MPU, or the like) of the information processing device or the like may be configured to read and execute the program. In such a case, the program and the storage medium storing the program configure the present invention.

In addition, the present invention may be realized, for example, using at least one processor or circuit configured to function of the embodiments explained above. The present invention may be distributed and realized using a plurality of processors.

This application claims the benefit of priority from Japanese Patent Application No. 2024-011699, filed on January 30, 2024, which is hereby incorporated by reference herein in its entirety.

**Claims**

1. An information processing device comprising at least one processor or circuit configured to function as:

   an input unit (120) configured to input a captured image of a subject from an imaging device of which a position/orientation is variable;
   a holding unit (110) configured to hold a three-dimensional map including information indicating a three-dimensional position of a feature of the subject;
   a derivation unit (130) configured to derive a position of the imaging device using the captured image and the three-dimensional map;
   an evaluation unit (140) configured to evaluate a stability of the position on the basis of information used for the derivation unit (130) to derive the position;
   a preparation unit (150) configured to prepare the three-dimensional map on the basis of the captured image and the position;
   a setting unit (160) configured to set information indicating reliabilities of information indicating the three-dimensional position of the feature of the subject and information indicating a three-dimensional position of the feature included in a predetermined area in the three-dimensional map, which are acquired on the basis of the captured image in an extended area of a predetermined area in the three-dimensional map held by the holding unit (110) , on the basis of a result of evaluation from the evaluation unit (140) ; and
   a correction unit (170) configured to correct the three-dimensional map on the basis of the information indicating the reliabilities set by the setting unit (160).

2. The information processing device according to claim 1, wherein the evaluation unit sets the stability of the position to be lower as the number of feature points used for the derivation unit to derive the position becomes smaller.

3. The information processing device according to claims 1 or 2, wherein the evaluation unit sets the stability of the position to be lower as a variance in position in the captured image of the feature points used for the derivation unit to derive the position becomes larger.

4. The information processing device according to any one of claims 1 to 3, wherein the evaluation unit sets the stability of the position to be lower as a variance in depth of the feature points used for the derivation unit to derive the position becomes larger.

5. The information processing device according to any one of claims 1 to 4, wherein the evaluation unit sets the stability of the position to be lower as a change in luminance in the captured image used for the derivation unit to derive the position becomes larger.

6. The information processing device according to any one of claims 1 to 5, wherein the setting unit sets the reliability of information indicating the three-dimensional position of the feature included in the predetermined area to be lower when the stability evaluated by the evaluation unit is low than when the stability is high.

7. The information processing device according to any one of claims 1 to 6, wherein the setting unit sets the reliability of the information indicating the three-dimensional position of the feature included in the predetermined area to be higher when the stability evaluated by the evaluation unit is high than when the stability is low.

8. The information processing device according to any one of claims 1 to 7, wherein an auxiliary indicator for measuring the position of the imaging device on the basis of the captured image is provided in a space in which the subject is located, and
   wherein the setting unit sets a reliability based on information of the auxiliary indicator in the information indicating the three-dimensional position of the feature of the subject.

9. The information processing device according to any one of claims 1 to 8, wherein a feature included in a previously prepared map of the three-dimensional map is defined as a first feature,

   wherein a feature added to the three-dimensional map by the preparation unit is defined as a second feature, and
   wherein the correction unit does not update information indicating a three-dimensional position of the first feature and updates information indicating a three-dimensional position of the second feature with a reliability lower than that of the first feature.

10. The information processing device according to claim 9,

    wherein the three-dimensional map includes information indicating an observation result of the subject at each of a plurality of viewpoints, and
    wherein the correction unit updates the information indicating a three-dimensional position of the feature such that an error between an observation result observed at a viewpoint when the feature is located at the three-dimensional position and an observation result actually observed at the viewpoint decreases;
    and/or
    wherein the three-dimensional map includes information indicating an observation result of the subject at each of a plurality of viewpoints, and
    wherein the correction unit updates the information indicating a three-dimensional position of the feature such that an error between color information of the feature and color information observed at the three-dimensional position at a viewpoint decreases.

11. The information processing device according to any one of claims 1 to 10,

    wherein an auxiliary indicator for measuring the position of the imaging device on the basis of the captured image is provided in a space in which the subject is located,
    wherein the stability evaluated by the evaluation unit is expressed by the number of feature points used for the derivation unit to derive the position, and
    wherein the setting unit sets a reliability of the feature based on the auxiliary indicator to be lower when the number of feature points is small than when the number of feature points is large;
    and/or
    further comprising a notification unit configured to notify that accuracy of the position derived by the derivation unit in a predetermined area has decreased when the stability evaluated by the evaluation unit is low;
    and/or
    further comprising a notification unit configured to notify of information for increasing the number of feature points used for the derivation unit to derive the position when the stability evaluated by the evaluation unit is low.

**12.** An information processing device comprising:

an input unit configured to input a captured image of a subject from an imaging device of which a position/orientation is variable;

a holding unit configured to hold a three-dimensional map including information indicating a three-dimensional position and a reliability of a feature of the subject;

a derivation unit configured to derive a position of the imaging device using the captured image and the three-dimensional map;

an evaluation unit configured to evaluate a stability of the position on the basis of information used for the derivation unit to derive the position;

a preparation unit configured to prepare the three-dimensional map on the basis of the captured image and the position; and

a setting unit configured to set information indicating reliabilities of information indicating the three-dimensional position of the feature of the subject and information indicating a three-dimensional position of the feature included in a predetermined area in the three-dimensional map, which are acquired on the basis of the captured image in an extended area of a predetermined area in the three-dimensional map held by the holding unit, on the basis of a result of evaluation from the evaluation unit.

**13.** An information processing method comprising:

inputting a captured image of a subject from an imaging device of which a position/orientation is variable;

holding a three-dimensional map including information indicating a three-dimensional position of a feature of the subject;

deriving a position of the imaging device using the captured image and the three-dimensional map;

evaluating a stability of the position on the basis of information used in the deriving to derive the position;

preparing the three-dimensional map on the basis of the captured image and the position;

setting information indicating reliabilities of information indicating the three-dimensional position of the feature of the subject and information indicating a three-dimensional position of the feature included in a predetermined area in the three-dimensional map, which are acquired on the basis of the captured image in an extended area of a predetermined area in the three-dimensional map held in the holding, on the basis of a result of evaluation from the evaluating; and

correcting the three-dimensional map on the basis of the information indicating the reliabilities set in the setting.

**14.** An information processing method comprising:

inputting a captured image of a subject from an imaging device of which a position/orientation is variable;

holding a three-dimensional map including information indicating a three-dimensional position and a reliability of a feature of the subject;

deriving a position of the imaging device using the captured image and the three-dimensional map;

evaluating a stability of the position on the basis of information used in the deriving to derive the position;

preparing the three-dimensional map on the basis of the captured image and the position; and

setting information indicating reliabilities of information indicating the three-dimensional position of the feature of the subject and information indicating a three-dimensional position of the feature included in a predetermined area in the three-dimensional map, which are acquired on the basis of the captured image in an extended area of a predetermined area in the three-dimensional map held in the holding, on the basis of a result of evaluation from the evaluating.

**15.** Anon-transitory computer-readable storage medium configured to store a computer program comprising instructions for executing the functions of the following units:

at least one processor or circuit configured to function as:

an input unit configured to input a captured image of a subject from an imaging device of which a position/orientation is variable;

a holding unit configured to hold a three-dimensional map including information indicating a three-dimensional position of a feature of the subject;

a derivation unit configured to derive a position of the imaging device using the captured image and the three-dimensional map;

an evaluation unit configured to evaluate a stability of the position on the basis of information used for the derivation unit to derive the position;

a preparation unit configured to prepare the three-dimensional map on the basis of the captured image and the position;

a setting unit configured to set information indicating reliabilities of information indicating the three-dimensional position of the feature of the subject and information indicating a three-dimensional position of the feature included in a predetermined area in the three-dimensional map, which are acquired on the basis of the captured image in an extended area of a predetermined area in the three-dimensional map held by the holding unit, on the basis of a result of evaluation from the evaluation unit; and

a correction unit configured to correct the three-dimensional map on the basis of the information indicating the reliabilities set by the setting unit.

FIG. 1

FIG. 2

INFORMATION PROCESSING DEVICE — 1

IMAGING DEVICE — 180

INPUT UNIT — 120

HOLDING UNIT — 110

DERIVATION UNIT — 130

EVALUATION UNIT — 140

PREPARATION UNIT — 150

SETTING UNIT — 160

CORRECTION UNIT — 170

NOTIFICATION UNIT — 190

## FIG. 3

REAL SPACE

KEY FRAME

FIG. 4

```
            ┌─────────────┐
            │    START    │
            └─────────────┘
                   │
                   ▼
     ┌───────────────────────────┐
     │        INPUT IMAGE        │───S1010
     └───────────────────────────┘
                   │
                   ▼
     ┌───────────────────────────┐
     │ CALCULATE POSITION/ORIENTATION │───S1020
     └───────────────────────────┘
                   │
                   ▼
     ┌───────────────────────────┐
     │      EVALUATE STABILITY   │───S1030
     └───────────────────────────┘
                   │
                   ▼
     ┌───────────────────────────┐
     │ PREPARE THREE-DIMENSIONAL MAP │───S1040
     └───────────────────────────┘
                   │
                   ▼
     ┌───────────────────────────┐
     │       SET RELIABILITY     │───S1050
     └───────────────────────────┘
                   │
                   ▼
     ┌───────────────────────────┐
     │     PERFORM CORRECTION    │───S1060
     └───────────────────────────┘
                   │
                   ▼         ┌─S1070
              ◇─────────────◇
              │    END?     │──── NO
              ◇─────────────◇
                   │ YES
                   ▼
            ┌─────────────┐
            │     END     │
            └─────────────┘
```

FIG. 5

```
                    ┌─────────────┐
                    │    START    │
                    └──────┬──────┘
                           │
                           ▼
        ┌────────────────────────────────────┐
        │ SELECT KEY FRAME TO BE CORRECTED    │── S1210
        └──────────────────┬─────────────────┘
                           │
                           ▼
        ┌────────────────────────────────────┐
        │ CORRECT POSITION/ORIENTATION OF     │── S1220
        │            KEY FRAME                │
        └──────────────────┬─────────────────┘
                           │
                           ▼
        ┌────────────────────────────────────┐
        │ CORRECT THREE-DIMENSIONAL           │── S1230
        │ POSITION OF FEATURE POINT           │
        └──────────────────┬─────────────────┘
                           │
                           ▼
                    ┌─────────────┐
                    │     END     │
                    └─────────────┘
```

FIG. 6A

KEY FRAMES SHARING PRIOR MAP AND FEATURE POINT

KEY FRAMES NOT SHARING PRIOR MAP AND FEATURE POINT

MISMATCH OCCURS IN MAP ADDED AT THE TIME OF RUNNING WHEN WHOLE NUMBER OF FEATURE POINTS IS SMALL

MAP ADDED AT THE TIME OF RUNNING (POSITION RELIABILITY OF FEATURE IS LOW) CONTRIBUTION PROPORTION TO CALCULATION OF POSITION: LOW

PREVIOUSLY PREPARED MAP (POSITION RELIABILITY OF FEATURE IS HIGH) CONTRIBUTION PROPORTION TO CALCULATION OF POSITION: HIGH

KEY FRAME PREPARED IN PRIOR MAP

PRIOR MAP (HIGH ACCURACY)

STATE IN WHICH COHERENCE IS NOT SATISFIED AND MAP DATA IS ADDED

POSITION ADJUSTMENT OF FEATURE AS A WHOLE

FIG. 6B

STABILITY IS MAINTAINED BY SATISFYING COHERENCE OF MAP AT THE TIME OF RUNNING

MAP ADDED AT THE TIME OF RUNNING (POSITION RELIABILITY OF FEATURE IS LOW) CONTRIBUTION PROPORTION TO CALCULATION OF POSITION: LOW

PREVIOUSLY PREPARED MAP CONTRIBUTION PROPORTION TO CALCULATION OF POSITION: LOW

WHEN NUMBER OF FEATURE POINTS USED FOR POSITION MEASUREMENT IS SMALL

PRIOR MAP IS RELIABLE AND PRECISION OF MAP AT THE TIME OF RUNNING IS INCREASED

MAP ADDED AT THE TIME OF RUNNING (POSITION RELIABILITY OF FEATURE IS LOW) CONTRIBUTION PROPORTION TO CALCULATION OF POSITION: LOW

PREVIOUSLY PREPARED MAP CONTRIBUTION PROPORTION TO CALCULATION OF POSITION: HIGH

WHEN NUMBER OF FEATURE POINTS USED FOR POSITION MEASUREMENT IS LARGE

FIG. 7

FIG. 8

INFORMATION PROCESSING DEVICE ⌐3

⌐110
HOLDING UNIT

⌐150
PREPARATION UNIT

⌐180
IMAGING DEVICE

⌐120
INPUT UNIT

⌐130
DERIVATION UNIT

⌐160
SETTING UNIT

⌐140
EVALUATION UNIT

FIG. 9

START

INPUT IMAGE — S2010

CALCULATE POSITION/ORIENTATION — S2020

EVALUATE STABILITY — S2030

PREPARE THREE-DIMENSIONAL MAP — S2040

DETERMINE RELIABILITY — S2050

S2060

END? — NO

YES

END

## FIG. 10

- Natural feature
- Feature on auxiliary Indicator
- Auxiliary indicator
- Key frame
- Current imaging device

11b
Look around slowly

11a
Accuracy of position
measurement is decreasing

Window

EP 4 597 429 A1

# FIG. 11

E05

E04

E06

E03

E07

CORRECTED TO
ALIGN WITH INDICATOR

E02

E01

E08

KEY FRAME AFTER
BEING CORRECTED

KEY FRAME BEFORE
BEING CORRECTED

## EUROPEAN SEARCH REPORT

**Application Number**

EP 25 15 4344

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/148167 A1 (ARATANI SHINICHI [JP]) 25 May 2017 (2017-05-25) | 1,2,6-8, 11-15 | INV. G06T7/73 |
| Y | * abstract * | 3-5 | |
| A | * paragraphs [0038] - [0039], [0042], [0044] - [0046], [0056], [0125], [0143] * <br> * figure 1 * | 9,10 | |
| Y | US 2021/232845 A1 (KOTAKE DAISUKE [JP] ET AL) 29 July 2021 (2021-07-29) * paragraphs [0043], [0081] * | 3-5 | |
| A | ZHU XIAO X ET AL: "A Visual SLAM System Based on the Panoramic Camera", 2019 IEEE INTERNATIONAL CONFERENCE ON REAL-TIME COMPUTING AND ROBOTICS (RCAR), IEEE, 4 August 2019 (2019-08-04), pages 53-58, XP033744689, DOI: 10.1109/RCAR47638.2019.9044117 [retrieved on 2020-03-20] * the whole document * | 1-15 | |

**TECHNICAL FIELDS SEARCHED (IPC)**

G06T

The present search report has been drawn up for all claims

| Place of search | Date of completion of the search | Examiner |
|---|---|---|
| Munich | 10 June 2025 | Luca, Mihai Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 4344

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | | Publication date |
|---|---|---|---|---|
| US 2017148167 A1 | 25-05-2017 | JP | 6789624 B2 | 25-11-2020 |
| | | JP | 2017096725 A | 01-06-2017 |
| | | US | 2017148167 A1 | 25-05-2017 |
| US 2021232845 A1 | 29-07-2021 | US | 2020012877 A1 | 09-01-2020 |
| | | US | 2021232845 A1 | 29-07-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020013560 A
- JP 4532982 B
- US 7529387 B
- JP 2024011699 A

**Non-patent literature cited in the description**

- **C. FORSTER** ; **M. PIZZOLI** ; **D. SCARAMUZZA**. SVO: fast semi-direct monocular visual odometry. *Proc. 2014 IEEE International Conference on Robotics and Automation (ICRA)*, 2014, 15-22
- **Z. ZHANG**. A flexible new technique for camera calibration. IEEE Trans. on Pattern Analysis and Machine Intelligence, 2000, vol. 2, 1330-1334
- **H. KATO** ; **M. BILLINGHURST** ; **I. POUPYREV** ; **K. IMAMOTO** ; **K. TACHIBANA**. Virtual object manipulation on a table-top AR environment. *Proc. IEEE and ACM International Symposium on Augmented Reality 2000*, 2000, 111-119
- **J. ENGEL** ; **T. SCHOEPS** ; **D. CREMERS**. LSD-SLAM: Large-scale direct monocular SLAM. Proc. 14th European Conference on Computer Vision (ECCV), 2014, 834-849